# EUROPEAN PATENT APPLICATION

(11) **EP 2 009 479 A1**
(43) Date of publication of application: **31.12.2008**
(21) Application number: 08252211.1
(22) Date of filing: 27.06.2008
(51) Int. Cl.: G02B 19/00, G03B 21/00, F21V 7/06

(54) **A reflective iris**

(30) Priority: 29.06.2007 US 819972
(71) Applicant: Christie Digital Systems USA, Inc., 90630 Cypress CA (US)
(72) Inventor: Ma, Joseph, Waterloo Ontario N2V 2W6 (CA)
(74) Representative: Beresford, Keith Denis Lewis

(57) **Abstract**

According to embodiments described in the specification, a reflective iris is described for concentrating collimated light emitted from a parabolic lamp, the parabolic lamp comprising a lamp aperture from which the collimated light is emitted. The reflective iris is comprised of a planar reflective element for reflecting the collimated light back towards the parabolic lamp, a shape of the planar reflective element-being generally complementary to a shape of the lamp aperture; and an optical aperture through the planar reflective element, disposed around a perpendicular axis of the planar reflective element, for light to pass through the planar reflective element. When the reflective iris is axially aligned with the parabolic lamp, the collimated light is reflected from the planar reflective element back towards the parabolic lamp, for reflection back through the optical aperture.

## Description

The specification relates generally to optical systems, and specifically to a reflective iris for concentrating collimated light emitted from a parabolic lamp.

### BACKGROUND

When a parabolic lamp, for example a parabolic mercury (Hg) lamp, is used as the light source in a projector, or another optical system, a large single condenser lens is generally used to collect collimated light emerging from the parabolic lamp, and focus it onto the entrance face of an integrator. A typical aperture size of a parabolic Hg lamp is 3" (76.2mm). That means a condenser lens with a diameter of at least 3" is needed in order to collect all the light emitted from the lamp and focus it on the integrator. If the input F-number of the collected light is F/1.3, the focal length of the parabolic lamp/condenser lens system is 3.9" (i.e. 3" x 1.3) (99.4mm, i.e.76.2mm x 1.3). As there is a general trend towards projectors getting smaller, such a long focal distance might not be attractive to designers of optical systems.

Moreover, there is another problem of using such a large lens. One of the factors governing the light collection efficiency of an integrator is the focal spot size on its entrance face. A long focal length will result in a large magnification factor on the image of the light source of the parabolic lamp. While a 3" (76.2mm) diameter (or greater) lens of a shorter focal length might be used in some instances, they are thicker, heavier, expensive, and are prone to optical distortions.

Hence there is a need for an apparatus to concentrate collimated light emitted from a parabolic lamp, which may be placed in front of the parabolic lamp to reduce the required size of a lens in a parabolic lamp/lens system.

### SUMMARY

A first broad aspect of an embodiment seeks to provide a reflective iris for concentrating collimated light emitted from a parabolic lamp, the parabolic lamp comprising a lamp aperture from which the collimated light is emitted. The reflective iris comprises a planar reflective element having a shape generally complementary to that of the lamp aperture, for reflecting the collimated light back towards the parabolic lamp. The reflective iris further comprises an optical aperture through the planar reflective element, disposed around a perpendicular axis of the planar reflective element, for light to pass through the planar reflective element, wherein, when the reflective iris is axially aligned with the parabolic lamp, the collimated light is reflected from the planar reflective element back towards the parabolic lamp, for reflection back through the optical aperture.

In some embodiments of the first broad aspect, an area of the optical aperture is generally complementary to that of a lens. In other embodiments of the first broad aspect, an area of the optical aperture is generally circular.

In some embodiments of the first broad aspect, the reflective iris further comprised an adjustable aperture apparatus for adjusting an area of the optical aperture. In some of these embodiments, the adjustable aperture apparatus comprises an iris diaphragm.

In other embodiments of the first broad aspect, the reflective iris further comprised an optical ultraviolet filter for preventing ultraviolet light from passing through the optical aperture.

In yet other embodiments of the first broad aspect, the shape of the planar reflective element is generally circular, having a diameter that is at least that of the lamp aperture.

In some embodiments of the first broad aspect, the reflective iris further comprises a body, the body comprising at least one planar surface, wherein the planar reflective element resides at the at least one planar surface. In some of these embodiments, the body further comprises a bore through an axis perpendicular to the at least one planar surface, the optical aperture comprising the bore. In some embodiments, a transverse cross-section of the body comprises an annulus, the bore comprising an annular aperture. In yet other embodiments, the body comprises A1. In yet other embodiments, the at least one planar surface comprises a reflective planar surface and the planar reflective element comprises the reflective planar surface. In yet further embodiments, the at least one planar surface comprises a reflective film applied to the at least one planar surface, and the planar reflective element comprises the reflective film.

In other embodiments, the body comprises a generally transparent material, the planar reflective element comprising a reflective film applied to a first area of the at least one planar surface, the reflecting film surrounding a second area of the at least one planar surface free of the reflecting film, and the optical aperture comprising the second area. In some of these embodiments, the reflective film comprises at least one of an aluminium film and an optical thin film structure. In yet other embodiments, the generally transparent material comprises glass. In some of these embodiments, the glass comprises at least one of Vycor^{™} and Pyrex^{™}.

In some embodiments of the first broad aspect, the body is mountable between the parabolic lamp and a lens. In some of these embodiments, the body is mountable on the parabolic lamp.

A second broad aspect of an embodiment seeks to provide a projector comprising a light production system, an imaging component and a projection component. The light production system comprises: a parabolic lamp for producing collimated light; the reflective iris of the first broad aspect, the optical aperture axially aligned with a lamp aperture of the parabolic lamp; a condenser lens axially aligned with the optical aperture, for accepting collimated light transmitted by the parabolic lamp through the optical aperture, and for focussing the collimated light transmitted by the parabolic lamp through the optical aperture onto an integrator; and the integrator, an entrance of the integrator axially aligned with the condenser lens, for channelling light to an imaging component. In these embodiments, the imaging component is for accepting light from the integrator and causing the light from the integrator to be formed into an image, and the projection component is for projecting the image.

### BRIEF DESCRIPTION OF THE DRAWINGS

Embodiments are described with reference to the following figures, in which:

Fig. 1 depicts an optical system for focusing light from a parabolic lamp onto an entrance of an integrator via a condenser lens, according to the prior art;

Fig. 2 depicts a lamp side view of a reflective iris according to a non-limiting embodiment;

Fig.3 depicts a cross-section of a non-limiting embodiment of a reflective iris, viewed along a line 3-3 of Figure 2;

Fig. 4 depicts a cross-section of a non-limiting embodiment of a reflective iris, viewed along a line 3-3 of Figure 2;

Fig. 5 depicts a cross-section of a non-limiting embodiment of a reflective iris, viewed along a line 5-5 of Figure 6;

Fig. 6 depicts a front view of a reflective iris according to a non-limiting embodiment; and

Fig. 7 depicts an optical system for focusing light from a parabolic lamp onto an entrance of an integrator via a reflective iris and a condenser lens, according to a non-limiting embodiment.

Fig. 8 depicts an optical system for focusing light from a parabolic lamp onto an entrance of an integrator via a reflective iris having a variable optical aperture and a condenser lens, according to a non-limiting embodiment.

### DETAILED DESCRIPTION OF THE EMBODIMENTS

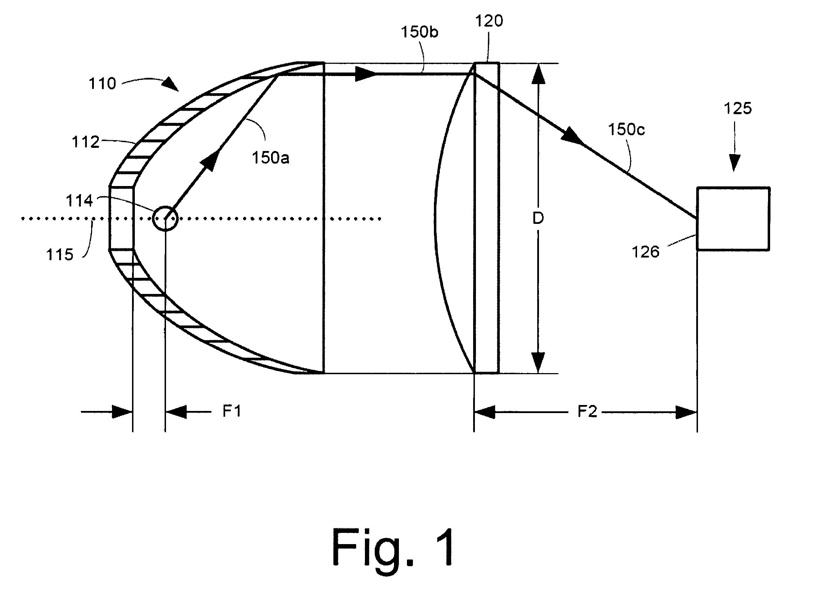

To gain an understanding of embodiments described hereafter, it is useful to first consider the prior art. Hence, Figure 1 depicts an optical system for focusing the light from a parabolic lamp 110 onto an entrance 126 of an integrator 125, via a condenser lens 120, according to the prior art. The condenser lens 120 and the integrator 125, are axially aligned with the parabolic lamp 110 along a central axis 115. The parabolic lamp 110 is depicted in cross-section. The condenser 120 is depicted in a side view, and the integrator 125 is depicted schematically. As known to one of skill in the art, the integrator 125 collects the light which impinges on the entrance 126, and channels it to another optical component, for example an imaging component in an optical projector, while simultaneously scattering the light internally to create a uniform beam of light.

The parabolic lamp 110 comprises a parabolic reflector 112 and a light source 114, the light source 114 located at the focal point of the parabolic reflector 114. As known to one of skill in the art, a light ray that enters the parabolic lamp 115 parallel to the central axis 115 will be reflected to the focal point of the parabolic reflector 112, due to the properties of the paraboloid geometry of the parabolic reflector 112. Similarly, light rays emitted from the focal point, for example from light source 114, emerge from the parabolic reflector 112 as collimated light rays (i.e. generally parallel to the central axis 115). The distance between the rear of the parabolic reflector 112 and the focal point is F1, and the aperture of the parabolic reflector 112 has a diameter of D. In one non-limiting example the light source 114 comprises an Hg arc lamp.

The condenser lens 120 also has a diameter of D. Although a condenser lens with a diameter larger than D could be used, it is generally desirable for the condenser lens to be as small as possible. The condenser lens 120 further has a focal length of F2. As the light emitted from the parabolic lamp 110 is collimated, light rays impinging on the condenser lens 120 are generally parallel. The condenser lens 120 accepts the collimated light and focuses it onto the entrance 126 of the integrator 125. The magnification factor of the image of the light source 114 onto the entrance 126 is F2/F1, and the F/# of the system is F2/D, as known to one of skill in the art.

Figure 1 further depicts a ray diagram of a light ray which follows a path 150a as it is emitted from the light source 114. The light ray then reflects from the parabolic reflector 112 along a collimated path 150b. The light ray then impinges on the condenser lens 120, where it is focussed onto the entrance 126 of the integrator 125, along path 150c, at an area generally known as the focal spot (i.e. the image of the light source 114).

While the light source 114 is generally approximated as a point source, the light source 114 is generally not a point source and may introduce scattering and a non-uniform distribution of light rays at the focal spot, leading to a larger focal spot size. Indeed the distribution of light rays at the focal spot is often approximated as a Gaussian distribution. Furthermore, the larger the focal length F2, the larger the magnification factor F2/F1 and the larger the focal spot size. If the focal spot size is larger than the entrance 126, the integrator 125 is not able to collect all the light in the focal spot.

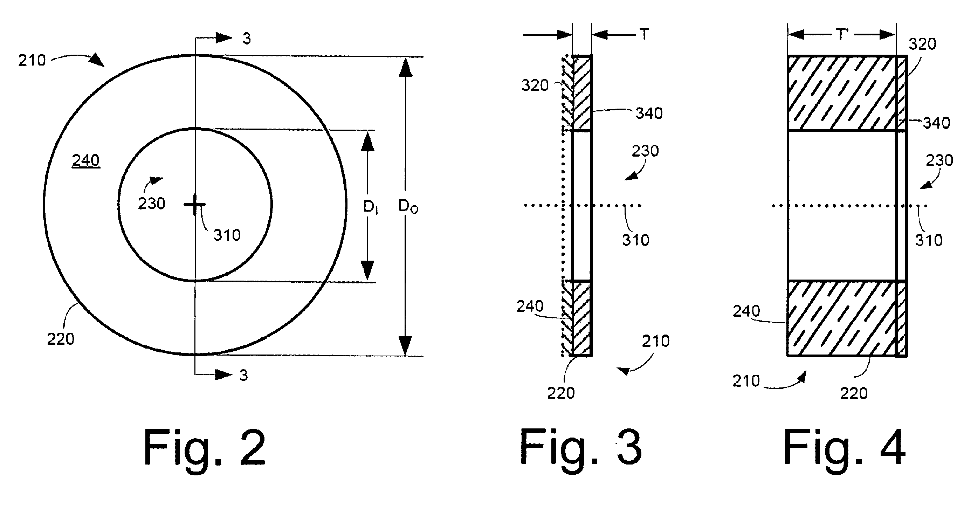

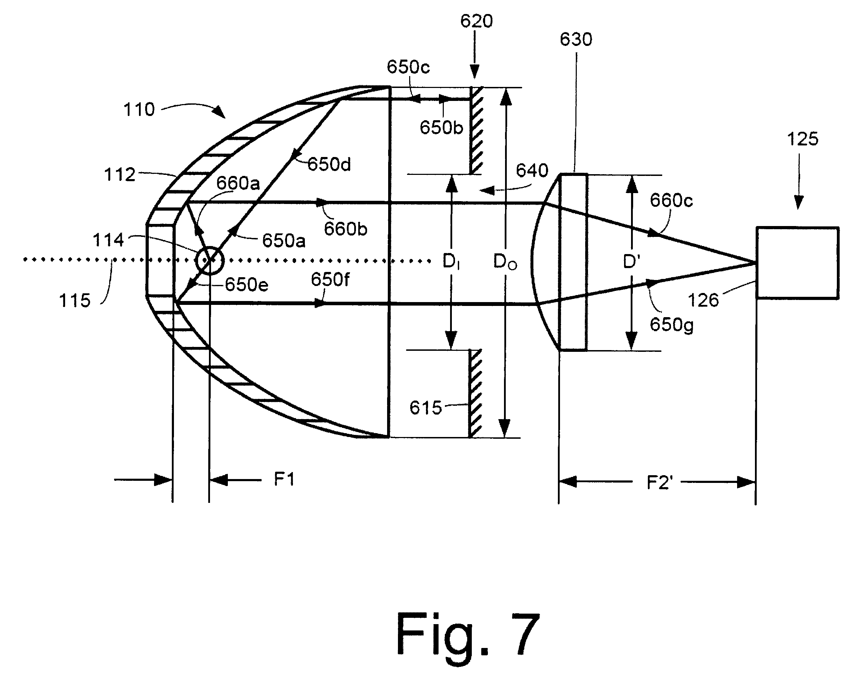

Figure 2 depicts a lamp-side view of a non-limiting embodiment of a reflective iris 210, which may be placed in front of the parabolic lamp 110, to concentrate the collimated light emitted from the parabolic reflector 112 into a smaller area, and ultimately reduce the size of the condenser lens 120. The interaction of the reflective iris 210 with a parabolic reflector/lens system will be described below with reference to Figure 7.

The reflective iris 210 comprises a body 220, the body 220 comprising a bore through the body 220, the bore centred along a perpendicular axis 310 (emerging from the page), so as to form an optical aperture 230, discussed in greater detail below in connection with a non-limiting embodiment. A lamp-side surface 240 of the body 220 is generally flat.

The reflective iris 220 further comprises a planar reflective element for reflecting light back to a parabolic lamp when the reflective iris 220 is placed in front of an aperture of a parabolic lamp (e.g. the parabolic lamp 110 of Figure 1), the lamp-side surface 240 towards the parabolic lamp, such that the perpendicular axis 310 is aligned with a central axis of the parabolic lamp (e.g. the central axis 115 of Figure 1). In some embodiments the body 220 is comprised of a reflective material, and the lamp-side surface 240 is polished so as to be generally reflective. In these embodiments, the planar reflective element comprises the lamp-side surface 240. In some embodiments, only the portion of the lamp side-surface 240 onto which collimated light from the parabolic lamp will impinge is reflective. In one non-limiting embodiment, the body is comprised of aluminium. In other embodiments, the body is comprised of another metal which is generally reflective when polished.

The optical aperture 230 permits light to pass there-through, the optical aperture 230 being centred along the perpendicular axis 310. As discussed briefly above, in a non-limiting embodiment, the optical aperture 230 is formed by the bore through the body 220. As discussed in greater detail below with reference to Figure 7, the planar reflective element serves to reflect light from the areas of the parabolic lamp, back to the parabolic lamp, for reflection back through the optical aperture 230, hence concentrating the collimated light emitted from the parabolic lamp through the optical aperture 230.

In the non-limiting embodiment depicted in Figure 2, the body 220 is generally annular in transverse cross-section, the bore forming the annular aperture (and the optical aperture 230). In these embodiments, the body 220 has an outer diameter Do and the optical aperture has an inner diameter D₁. The outer diameter Do is generally greater than or equal to the diameter of the aperture of a parabolic lamp in a parabolic reflector/lens system. The inner diameter D₁, is generally less than or equal to the diameter of the lens in the parabolic reflector/lens system.

Figure 3 depicts a cross section along a line 3-3, of a non-limiting embodiment of the reflective iris 210 depicted in Figure 2. In cross-section, the body 220 is further seen to have a thickness T. Figure 3 further depicts a lens side surface 340. In these embodiments, the lens-side surface 340 may be flat, while in other embodiments the lens-side surface 340 may not be flat, for example rough. In some embodiments, the lens-side surface 340 may be generally parallel to the lamp-side surface 240, as depicted. However, in other embodiment, the lens-side surface 340 may not disposed at an angle to the lamp-side surface 240.

In one non-limiting embodiment, the planar reflective element comprises a reflective coating 320, depicted in outline, that has been applied to the lamp-side surface 240, the reflective coating 320 for reflecting light from the lamp-side surface 240. In some embodiments, the reflective coating 320 comprises a reflective metal such as A1. In other embodiments, the reflective coating 320 comprises a thin film optical coating. In some of these embodiments, the thin film optical coating comprises a multi-layer thin film optical coating. In these embodiments, the body 220 is comprised of any suitable material including, but not limited, to metal or glass.

Figure 3 further depicts the optical aperture 230 as formed by the bore through the body 220, described above. In some of these embodiments, the bore may be filled by an optical filter including but not limited to an ultraviolet (UV) filter.

Figure 4 depicts a cross-section along a line 3-3, of another non-limiting embodiment of the reflective iris 210 depicted in Figure 2. In this embodiment, the body 220 has a thickness T', and is comprised of an optically transparent material. In one non-limiting embodiment, the optically transparent material comprises glass. In some of these embodiments, the glass is a heat resistant glass including, but not limited to, Vycor^{™}, Pyrex^{™} and the like. In these embodiments, the planar reflective element comprises the reflective coating 320 applied to the lens-side surface 340. In these embodiments, light may enter the body 220 via the lamp-side surface 240 and be reflected from the reflective coating 320 at the lens-side surface 340. In some embodiments, for example embodiments where the light has an angle of incidence of 0°, the light reflected from the reflective coating 320 will further be reflected back through the lamp-side surface 240.

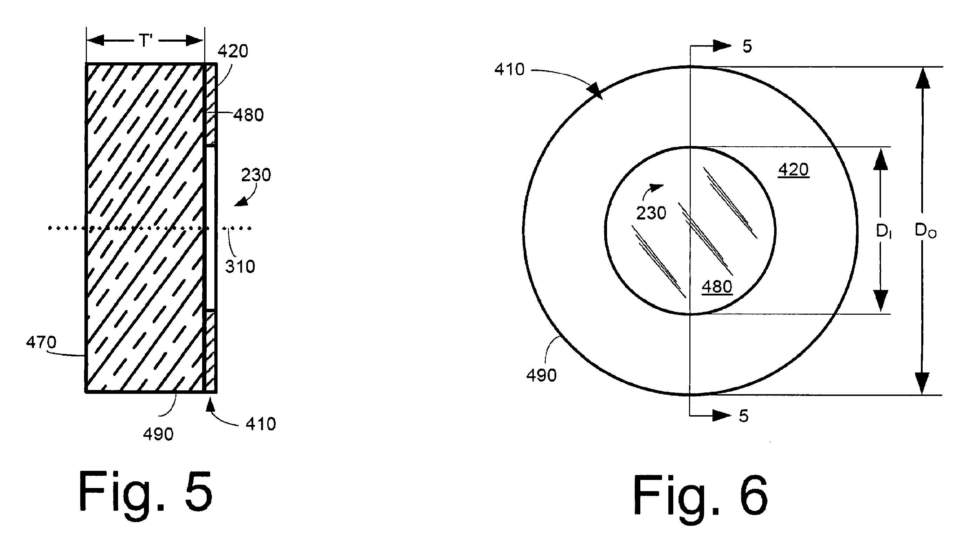

Figure 5 depicts a cross section of another non-limiting embodiment of a reflective iris 410, taken along a line 5-5 of Figure 6. Elements of the embodiment of Figure 5 are similar to the embodiment depicted in Figure 4, with like elements depicted with like numbers. In this embodiment, the planar reflective element comprises a reflective coating 420 applied to a surface 480 of a body 490. The body 490 is similar to the body 220 of Figure 2, however, the body 490 does not comprise a bore. The body 490 is comprised of a solid transparent material including, but not limited to, glass, as described above. In one non-limiting embodiment, the body 490 may comprise an optical filter for allowing certain ranges of wavelengths of light to pass there-through, and deny other ranges of wavelengths of light to pass therethrough. In some of these embodiments, the optical filter may comprise a UV filter.

The surface 480 may comprise one of a lens-side surface and a lamp-side surface, similar to the lens-side surface 340 or the lamp-side surface 240 described above. The body 490 further comprises a generally flat opposite surface 470, which is generally parallel to the surface 480. When the reflective iris 410 is placed between a parabolic lamp and a lens, for example as in Figure 7, the body 490 may be mounted with either the surface 480 or the opposite surface 470 placed towards the parabolic lamp. In some non-limiting embodiments, the surface 480, the opposite surface 470, or both surfaces may be coated with at least one optical coating including but not limited to a thin film UV filter. In some of the embodiments where at least one optical coating has been applied onto the surface 480, the at least one optical coating may be applied only to the area of the optical aperture 230.

In the embodiment depicted in Figure 5, the optical aperture 230 is formed by a pattern in the reflective coating 320. In other words, a first area of the surface 480 is coated with the reflective coating 420, while a second area of the surface 480 is free of the reflective coating 420, the first area generally surrounding the second area. The optical aperture 230 comprises the area of the surface 480 which is free of the reflective coating. Hence, light is reflected from the reflective coating 420 and passes through the optical aperture 230, as well as the body 490 comprised of transparent material.

Figure 6 depicts the reflective iris 410 of Figure 5 as viewed facing the surface 480 of the body 490. In one non-limiting embodiment, the reflective coating 420 comprises an annulus, the optical aperture 230 comprising the annular aperture. In these embodiments, the reflective coating 420 has an outer diameter Do and the optical aperture 230 has an inner diameter D₁, as described above. In this embodiment, the body 490 is cylindrical. In some embodiments, the body 490 has a cylindrical diameter of Do, however, in other embodiments, the body 490 may have a cylindrical diameter greater than Do. The diameter Do is generally greater than or equal to the diameter of the aperture of a parabolic lamp in the parabolic reflector/lens system. The diameter D₁ is generally less than or equal to the diameter of the lens in the parabolic reflector/lens system.

In another non-limiting embodiment, the reflective coating 420 may be sandwiched between two transparent bodies. In yet another non-limiting embodiment, the reflective coating 420 may be sandwiched between a transparent body and a non-transparent body, the non-transparent body comprising a bore similar in diameter the annular aperture of the reflective coating, and axially aligned with the optical aperture 230 of the reflective coating 420.

While the reflective iris 210 and the reflective iris 410 are depicted in Figure 2 and 6 respectively, as generally annular, in other embodiments, the reflective iris 210 and the reflective iris 410 may have a different shape. In one non-limiting example, the optical aperture 230 may be similar in shape to the entrance 126 of the integrator 125. In another non-limiting example, the body 210 or the body 490 may be of a shape which is compatible with a mounting apparatus in an optical system.

Attention is now directed to Figure 7, which depicts an optical system for focusing the light from the parabolic lamp 110 onto the entrance 126 of the integrator 125, via a reflective iris 620 and a condenser lens 630, according to a non-limiting embodiment. Figure 7 which is similar to Figure 1, with like elements depicted with like numbers. The reflective iris 620 comprising a planar reflective element 615 (e.g. the lamp-side surface 240 of Figure 2, the reflective coating 320 of Figures 3 and 4, or the reflective coating 420 of Figures 5 and 6) and an optical aperture 640 (e.g. the optical aperture 230) is depicted in schematic. The reflective iris 620 may comprise the reflective iris 220 of Figures 2, 3 and 4, or the reflective iris 410 of Figures 5 and 6, or another reflective iris comprising a planar reflective element and an optical aperture. In any event, the reflective iris 620, the condenser lens 630 and the integrator 125 are axially aligned with the central axis of the parabolic lamp 110.

The aperture of the parabolic lamp 110 has a diameter Do, as described above. In some embodiments, the reflective element 615 also has a diameter Do, while in other embodiments, the reflective element 615 has a diameter that is greater than Do. The optical aperture 640 has a diameter D₁, which is less than the diameter Do. The condenser lens 630 has a diameter D' which in some embodiments is similar to the diameter D₁. In other embodiments, the diameter D' is greater than the diameter D₁. In any event, the diameter D₁ is less than the diameter D of the condenser lens 120 of Figure 1.

Figure 7 further depicts a ray diagram of a light ray which follows a path 650a as it is emitted from the light source 114 at the focal point of the parabolic reflector 112. The light ray then reflects from the parabolic reflector 112 along a collimated path 650b. The light ray then impinges on the reflecting iris 620 where is it reflected back along a path 650c towards the parabolic reflector 112, the path 650c being congruent with the path 650c. Due to the properties of the parabolic reflector 112, as the light ray is generally parallel with the central axis of the parabolic reflector 112 as it travels back towards the parabolic reflector 112, it is then reflected back towards the focal point along a path 650d congruent with the original emission path 650a. The light ray then passes through the focal point along a path 650e, to a point on the parabolic reflector 112 where path 650d and 650e intersect the parabolic reflector 112: in other words 180° away from the original emission path 650a. Indeed, the light ray is effectively emitted from the light source 114 along the path 650e.

The light ray is again reflected from the parabolic reflector 112 along a second collimated path 650f, which is closer to the central axis of the parabolic lamp than the collimated path 650b, such that when the light ray emerges from the parabolic lamp 112, it travels through the optical aperture 640 of the reflective iris 620 and impinges on the condenser lens 630. At the condenser lens 630, the light ray is focussed onto the entrance 126 of the integrator 125, along the path 650g, to form part of the focal spot.

For comparison, Figure 7 also depicts the ray diagram of a light ray which follows a path 660a as it is emitted from the light source 114. The light ray then reflects from the parabolic reflector 112 along a collimated path 660b. The light ray then passes through the optical aperture 640 and impinges on the condenser lens 120, where it is focussed onto the entrance 126 of the integrator 125, along path 660c, to form part of the focal spot.

In general, light rays whose initial emission path (e.g. path 660a) is less than the diameter D₁ of the optical aperture 640 will be reflected from the parabolic reflector 112 and through the optical aperture 640. Light rays whose initial emission path is greater than the diameter D₁of the optical aperture 640 will be impinge on the reflective element 615 after being reflected from the parabolic reflector 112, to be reflected back to the parabolic reflector 112 for reflection back through said optical aperture 640. In this manner, the light emitted from the parabolic lamp 110 is concentrated into the area of the optical aperture 640, an area which is generally smaller than the aperture of the parabolic lamp 110. This allows a reduction in the diameter of the condenser lens 630 needed to collect and focus the light onto the entrance 126 of the integrator 125 with the diameter D' of the condenser lens 630 in the system of Figure 7 being less than the diameter D of the condenser lens 120 in the system of Figure 1. As the cost of lenses tends to be inversely proportional to the square of the diameter of the lens, the cost savings can be significant.

To consider a further advantage of the reflective iris 620, consider the F/# of the system of Figure 1, without the reflective iris 620, and the system of Figure 7 with the reflective iris 620. The F/# of the system of Figure 1 is FX1, which may be calculated using the formula FX1=F2/D. The F/# of the system of Figure 7 is FX7, which may be calculated using the formula FX7=F2'/D₁, where F2' is the focal length of the condenser lens 630. Note that in calculating the F/# of the system of Figure 7, it is the diameter of the optical aperture 640 which is used, and not the diameter of the condenser lens 630, as the area of the light falling on the condenser lens 630 is defined by the optical aperture 630.

For the two systems to achieve similar F/#'s, i.e. FX1=FX7, the condenser lens 620 must have a focal length F2'=F2*D'/D. In other words, the focal length F2' is a fraction D'/D of the focal length F2 to achieve the same F/#. This allows the distance between the condenser lens 630 and the integrator 125 to be reduced in a parabolic lamp/condenser lens system that employs the reflective iris 620, when compared to a parabolic lamp/condenser lens system that does not employ the reflective iris 620.

Furthermore, the magnification of the system of Figure 1 is F2/F1, while the magnification of system of Figure 7 is F2'/F1. As F2' is less than F2, the magnification of the system of Figure 7 is less than the magnification of the system of Figure 1. Hence, the size of the focal spot on the entrance 126 is reduced, increasing the light collection efficiency of the system.

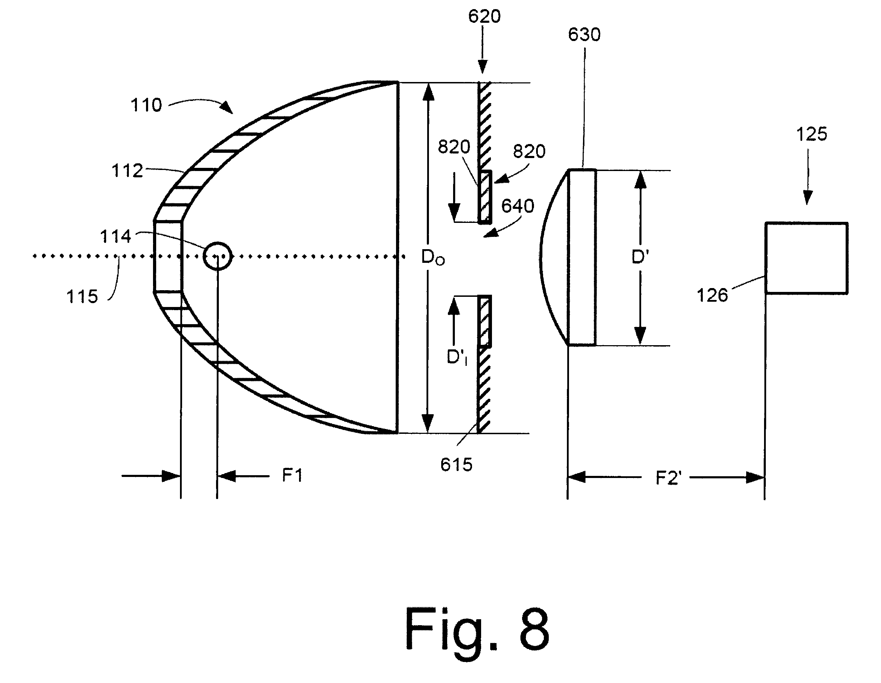

Figure 8 is substantially similar to Figure 1, with like elements depicted with like numbers and depicts another non-limiting embodiment, in which the reflective iris 620 may comprises an apparatus 820 for varying the area of the optical aperture 640. Hence, in this embodiment, the optical aperture 640 has a variable diameter D'₁. In some embodiments the apparatus 820 is inserted into the optical aperture 640 (as depicted). In other embodiments, the apparatus 640 may be mounted on the lamp side of the reflective iris 620, while in yet other embodiments, the apparatus 640 may be mounted on the lens side of the reflective iris 620. In yet other embodiments, the apparatus 640 may be a separate element from the reflective iris 620 and be mounted either between the reflective iris 620 and the condenser lens 630, or between the reflective iris 620 and the parabolic lamp 110. The apparatus 820 may also generally include a device for the user of the system of Figure 8 to adjust the variable diameter D'₁. In some embodiments, a lamp-facing surface 830 of the apparatus 820 is reflective. In some non-limiting embodiments, the apparatus 820 comprises an iris diaphragm.

By varying the variable diameter D'₁ of the optical aperture 640, the F/# of the system of Figure 8, may be varied according to F/#= F2'/D'₁. Hence smaller optical aperture 640 will lead to a larger F/#. This has the effect of tightening the cone angle of the light impinging on the entrance 126, which results in a better contrast ratio for the optical component towards which the integrator 125 channels the light toward.

In one non-limiting example, the system of Figure 7 and/or the system 8 comprises a light production system for an optical projector. In some of these embodiments, the optical projector comprises an analog optical projector, while in other embodiments, the optical projector comprises a digital optical projector, for example a digital optical projector as manufactured by Christie Digital Systems Canada, Inc., 809 Wellington St. N., Kitchener, Ontario, Canada N2G 4Y7.

In some embodiments the reflective iris 640 may be adapted for mounting between the condenser lens 630 and the parabolic lamp 110. In other embodiments, the reflective iris 640 may be adapted for mounting to the parabolic lamp 110, for example by gluing the reflective iris 640 directly to the aperture of the parabolic lamp 110.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A reflective iris for concentrating collimated light emitted from a parabolic lamp, the parabolic lamp comprising a lamp aperture from which the collimated light is emitted, comprising,
- a planar reflective element (210) having a shape generally complementary to that of the lamp aperture, for reflecting the collimated light back towards the parabolic lamp (110); and
- an optical aperture (230) through said planar reflective element, disposed around a perpendicular axis (310) of the planar reflective element, for light to pass through said planar reflective element;
- wherein, when said reflective iris is axially aligned with the parabolic lamp, the collimated light is reflected from said planar reflective element back towards the parabolic lamp, for reflection back through said optical aperture.

2. The reflective iris of claim 1, wherein an area of said optical aperture is generally circular.

3. The reflective iris of claim 1 or claim 2, further comprising an adjustable aperture apparatus (820) for adjusting an area of said optical aperture.

4. The reflective iris of claim 3, wherein said adjustable aperture apparatus comprises an iris diaphragm.

5. The reflective iris of any preceding claim, further comprising an optical ultraviolet filter for preventing ultraviolet light from passing through said optical aperture.

6. The reflective iris of claim 1, wherein the shape of said planar reflective element is generally circular, having a diameter that is at least that of the lamp aperture.

7. The reflective iris of claim 1, further comprising a body, said body comprising at least one planar surface, wherein said planar reflective element resides at said at least one planar surface.

8. The reflective iris of claim 7, wherein said body comprises a generally transparent material, said planar reflective element comprising a reflective film applied to a first area of said at least one planar surface, said reflecting film surrounding a second area of said at least one planar surface free of said reflecting film, and said optical aperture comprising said second area.

9. The reflective iris of claim 8, said reflective film comprising at least one of an aluminium film and an optical thin film structure.

10. The reflective iris of claim 8 or claim 9, wherein said generally transparent material comprises glass.

11. The reflective iris of claim 10, wherein said glass comprises at least one of Vycor^{TM} and PyreX^{TM}.

12. The reflective iris of claim 7, wherein said body is mountable between said parabolic lamp and a lens.

13. The reflective iris of claim 7, wherein said body is mountable on said parabolic lamp.

14. A projector comprising,
- a light production system, said light production system comprising,
- a parabolic lamp (110) for producing collimated light;
- the reflective iris (620) of any of claims 1 to 11, said optical aperture (640) axially aligned with a lamp aperture of said parabolic lamp;
- a condenser lens (630) axially aligned with said optical aperture, for accepting collimated light transmitted by said parabolic lamp through said optical aperture, and for focussing said collimated light transmitted by said parabolic lamp through said optical aperture onto an integrator (125);
- said integrator having an entrance (126) axially aligned with said condenser lens, for channelling light to an imaging component;
- said imaging component being adapted to accept light from said integrator and to cause said light from said integrator to be formed into an image; and
- a projection component for projecting said image.
